# EUROPEAN PATENT SPECIFICATION

(11) **EP 2 000 868 B1**
(45) Date of publication and mention of the grant of the patent: **02.04.2014**
(21) Application number: 08156658.0
(22) Date of filing: 21.05.2008
(51) Int. Cl.: G05B 19/05

(54) **Method of acquiring status information of I/O units**
Verfahren zur Erfassung von Statusinformationen von E/A-Einheiten
Procédé pour l'acquisition d'informations de statut d'unités d'E/S

(30) Priority: 25.05.2007 JP 2007139631
(43) Date of publication of application: 10.12.2008
(73) Proprietor: FANUC CORPORATION, Oshino-mura Minamitsuru-gun Yamanashi 401-0597 (JP)
(72) Inventor: Sone, Yuji, Yamanashi 401-0597 (JP); Hada, Kouji, Yamanashi 401-0597 (JP)
(74) Representative: Ward, James Norman

(56) References cited:
- EP-A- 1 396 771
- EP-A- 1 420 316
- US-A- 4 949 299

## Description

### BACKGROUND OF THE INVENTION

### 1. Field of the Invention

The present invention relates to a method of acquiring status information of external-signal input/output units (hereinafter referred to as I/O units) connected to a numerical controller for controlling a machine tool. In particular, the present invention relates to a method of acquiring status information indicative of abnormalities occurred in the I/O units connected to a programmable controller (PC) provided in the numerical controller.

### 2. Description of Related Art

In order to input/output information between a numerical controller and auxiliary devices of a machine tool, a plurality of I/O units are dependently connected to the numerical controller (see JP11-231923A and JP6-138916A). Usually, input information (i.e. DI data) and output information (i.e. DO data) are transmitted between the numerical controller and the I/O units. Collection of status information as internal information of the I/O units (e.g. an alarm for overheat protection of a DO driver built in the I/O unit) is performed by the numerical controller.

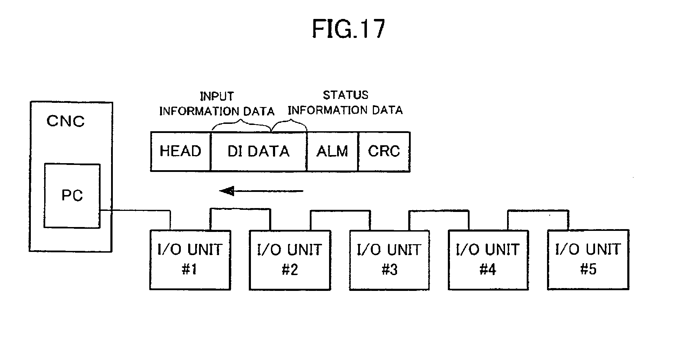

Conventionally, the status information of the I/O units connected to the numerical controller is transmitted by using an area of the same frame, i.e. a part of the DI data, and therefore there is a problem that an amount of transmittable DI data is decreased by the status information data (see FIG. 17). An alarm procedure such as determining whether the status information included in the DI data is to be used or not and displaying the occurrence of alarm on a display device is dependent on a program (ladder program) prepared by a user. Further, since it is necessary to search the status information of the I/O units by analyzing every DI data, it takes a considerable time to recognize the occurrence of abnormality in the I/O units. Also, there is a problem of increasing a total amount of transmission of the information if the status information is acquired from all of the I/O units.

EP 1396771 discloses a slave network system constructed by connecting a safety PLC constituting a master unit and safety slaves to each other through a network.

EP 1420316 relates to systems and methods for distributing control information such as event notifications and status in a substantially real time manner. Instant messaging components are installed on local control components and remote diagnostic equipment that communicate across a network.

### SUMMARY OF THE INVENTION

The present invention provides a method of acquiring status information indicative of abnormality occurred in I/O units without decreasing an amount of transmittable information of DI and DO data and without greatly increasing a total amount of the transmission due to the status information and without dependence on a user program.

A method of the present invention acquires status information of I/O units connected to a numerical controller for transmitting input/output information from/to the numerical controller. The method comprises the steps of: storing particulars of an abnormality occurred in any of the I/O units as status information within the I/O unit in which the abnormality has occurred; transmitting a notification of occurrence of the abnormality and information indicative of the I/O unit in which the abnormality has occurred from the I/O unit to the numerical controller; storing the information indicative of the I/O unit in which the abnormality has occurred in the numerical controller; transmitting a request for the status information from the numerical controller to the I/O unit in which the abnormality has occurred, in response to the notification of the abnormality from the I/O unit; transmitting the status information stored in the I/O unit in which the abnormality has occurred to the numerical controller in response to the request for the status information; and storing the transmitted status information of the I/O unit in the numerical controller.

The status information may be transmitted with the input information from the I/O unit to the numerical controller as being added to the input information.

The status information may be transmitted from the I/O unit to the numerical controller as packet information separate from the input/output information.

The method may further comprise a step of displaying the transmitted status information on a display device of the numerical controller.

The status information may be acquired from a plurality of I/O units dependently connected to the numerical controller.

With the above arrangement, the status information of the I/O unit can be acquired without dependence on the user program since the status information is transmitted using an area separate from the DI data in the input signal to be processed independently from the DI data.

By performing the acquisition of the status information from one I/O unit in one scanning cycle of transmission of the DO/DI data to/from the I/O units, the status information of the I/O units can be acquired without compressing a communication band.

In a case where abnormalities have occurred in a plurality of I/O units, the status information is acquired in the order of occurrence of the abnormalities registered in storage means to acquire the status information form all of the I/O units in which the abnormalities have occurred.

By transmitting the status information as packet information separate from the DI data, the status information can be acquired independently of the transmission of the DI data.

It can be specified in which I/O unit an abnormality has occurred and with which input/output signal the occurrence of an abnormality of the I/O unit is notified by the PC according to the software for the PC, to shorten the time required for investigating a cause of the abnormality in the I/O units.

### BRIEF DESCRIPTION OF THE DRAWINGS

FIG. 1 is a schematic diagram of a numerical controller and I/O units dependently connected to the numerical controller according to an embodiment of the present invention;
FIG. 2 is a schematic diagram showing an example of notifying a status abnormality in I/O unit to the numerical controller;
FIG. 3 is a schematic diagram showing an example of requesting status information to the I/O unit;
FIGS. 4a-4c are schematic diagrams showing an example of transmitting the status information from the I/O unit to the numerical controller;
FIG. 5 is a schematic diagram showing an example of occurrence of abnormality in a plurality of I/O units #2 and #4;
FIG. 6 is a schematic diagram showing an example of notifying status abnormalities from I/O units #2 and #4 to the numerical controller;
FIG. 7 is a schematic diagram showing an example of storing the status abnormality notifications in the numerical controller;
FIG. 8 is a schematic diagram showing an example of requesting the status information from the numerical controller to the I/O unit #2;
FIG. 9 is a schematic diagram showing an example of transmitting the status information from the I/O unit #2 to the numerical controller;
FIG. 10 is a schematic diagram showing an example of requesting the status information from the numerical controller to the I/O unit #4;
FIG. 11 is a schematic diagram showing an example of transmitting the status information from the I/O unit #4 to the numerical controller;
FIG. 12 is a schematic diagram showing an example of sending a status information requesting command to the I/O unit #2;
FIG. 13 is a schematic diagram showing an example of transmitting the status information of the I/O unit #2 by a separate packet;
FIG. 14 is a schematic diagram showing an example of a numerical control system in which a plurality of I/O units are dependently connected to a PC through a communication control device and a communication line;
FIG. 15 is a flowchart of processing for acquiring status information from one I/O unit;
FIG. 16 is a flowchart of processing for acquiring status information from a plurality of I/O units; and
FIG. 17 is a schematic diagram showing an example of prior art in which the status information and the DI data are transmitted in the same frame.

### DETAILED DESCRIPTION

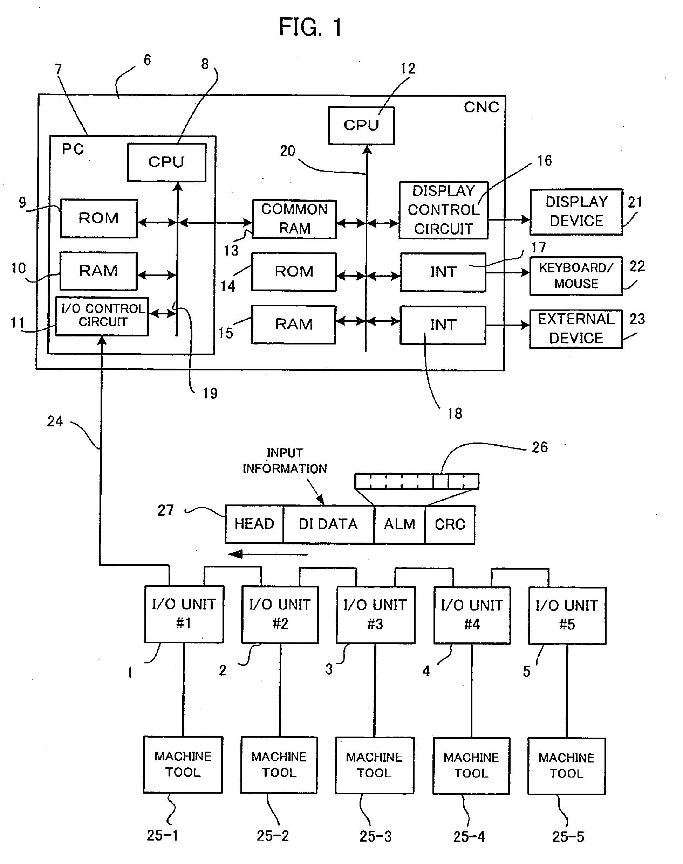

FIG. 1 shows a system configuration of a computerized numerical controller (CNC) 6. The numerical controller 6 is provided with a PC (programmable controller) 7 which is connected to I/O units 1-5 via an I/O control circuit 11 and a communication line 24. The I/O units 1-5 are dependently connected to the PC 7 by the communication line 24. The PC 7 functions as a master device and the I/O units 1-5 functions as slave devices. An input signal 27 from any of the I/O units 1-5 to the PC 7 comprises frames of a HEAD section, a DI data section, an ALM (alarm) section and a CRC (cycle redundancy check) section. The HEAD section stores information identifying the I/O unit from which the input signal 27 is being sent and a size of sending data, etc., the DI section stores input information operating machine tool such as turning on/off switch, the ALM section stores alarm information such as an alarm of communication error and an error in a parity check of RAM, and the CRC section stores information indicative of irregularity of data of the input signal 27 due to noises, etc. The ALM section as shown in FIG. 1 consists of eight bits. In order to notify the numerical controller 6 of an occurrence of abnormality, such as alarm for overheat protection of the DO driver, in any of the I/O units 1-5 as status abnormality information, a third bit 26 of the ALM section is used as a status abnormality notifying bit. When an abnormality occurs in the I/O unit, a necessary procedure is performed for preventing a secondary damage in the I/O unit. For instance, in a case where a ground fault occurs at an output of the DO driver, an overheat protection function of the DO driver is performed to turn off an output of the DO driver in the I/O unit.

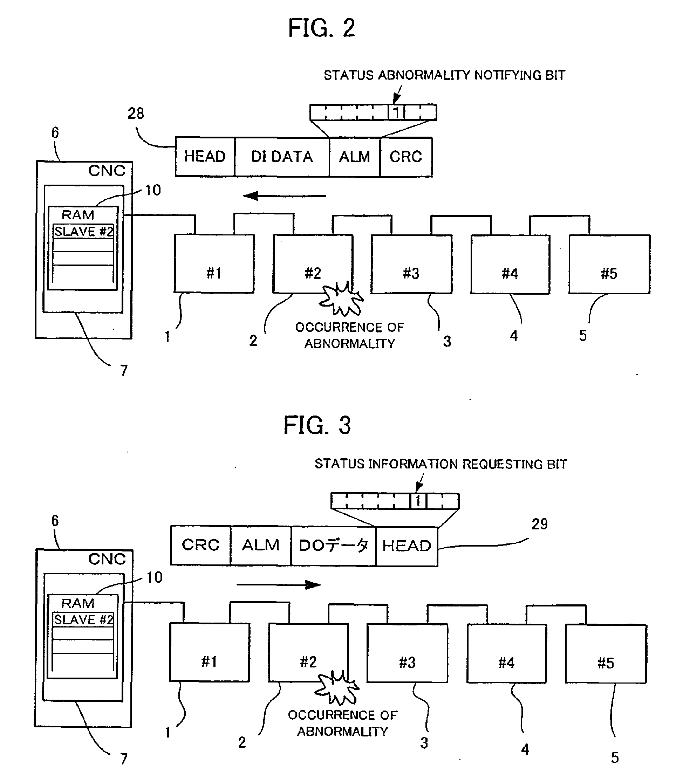

FIG. 2 shows an example of transmitting status abnormality information indicative of an abnormality occurred in the I/O unit #2 to the PC7. As shown in FIG. 2, when an abnormality occurred in the I/O unit #2, the I/O unit #2 sets the status abnormality notifying bit in the ALM section of an input signal 28 and sends the input signal 28 to the PC 7. The ALM section as shown in FIG. 2 has eight bits in which the third bit is utilized as the status abnormality notifying bit. The use of the third bit as the status abnormality notifying bit is merely an example and another appropriate bit in the ALM section may be used as the status abnormality notifying bit. Upon receipt of the input signal 28 having the ALM section with the status abnormality notifying bit set, the PC 7 specifies the I/O unit #2 in which an abnormality has occurred based on the information in HEAD section of the input signal 28, and stores the information, e.g. slave number 2, indicative of the I/O unit in which the abnormality has occurred as status-information acquiring I/O unit information in the RAM 10. The status-information acquiring I/O unit information may be stored other than in the RAM 10, but in a register provided in the I/O control circuit 11 shown in FIG. 1.

FIG. 3 shows an example of transmitting a status information request from the PC7 to the I/O unit #2 in which an abnormality has occurred. When the PC 7 transmits an output signal 29 to the I/O unit #2 that is determined as the I/O unit from which the status abnormality notification has been transmitted based on the status-information acquiring I/O unit information, the PC 7 transmits an output signal 29 with the status information requesting bit set. In the example shown in FIG. 3, a sixth bit of the HEAD is used as the status information requesting bit.

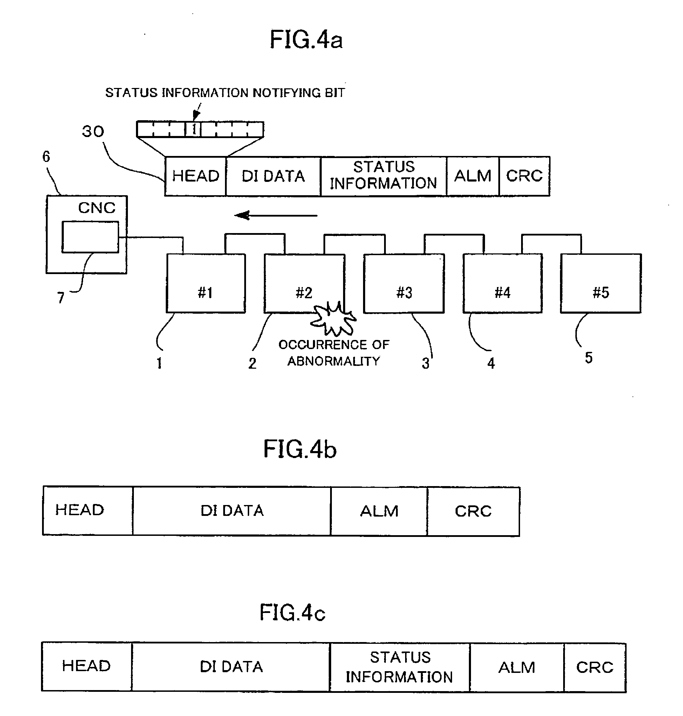

FIG. 4a shows an example of transmitting the status information from the I/O unit #2 to the PC 7. When the I/O unit #2 receives the output signal 29 having the HEAD section with the status information requesting bit set, the I/O unit #2 sets a status information transmitting bit in the HEAD section of an input signal 30, and sends the input signal 30 with the status information added next to the DI data. In the example shown in FIG. 4a, the fifth bit of the HEAD section is used as the status information transmitting bit. As shown in FIG. 4b, in a state where no abnormality occurred in the I/O unit, the input signal from the I/O unit to the PC 7 consists of a series of frames "HEAD", "DI data", "ALM" and "CRC".

The output signal from the PC7 to the I/O unit consists of a series of frames "HEAD", "DO data", "ALM" and "CRC".

FIG. 4c shows an input signal from the I/O unit with the status information added next to the DI data when the status information is required in the case where the abnormality occurred in the I/O unit. In transmitting the status information from the I/O unit to the PC 7, the status information is added to the input signal after the DI data to consist of a series of five frames. Thus, the status information is requested to only the I/O unit in which an abnormality has occurred, and the status information is acquired from the I/O unit in which the abnormality has occurred, so that the status information is acquired without decreasing communication area in the input signal

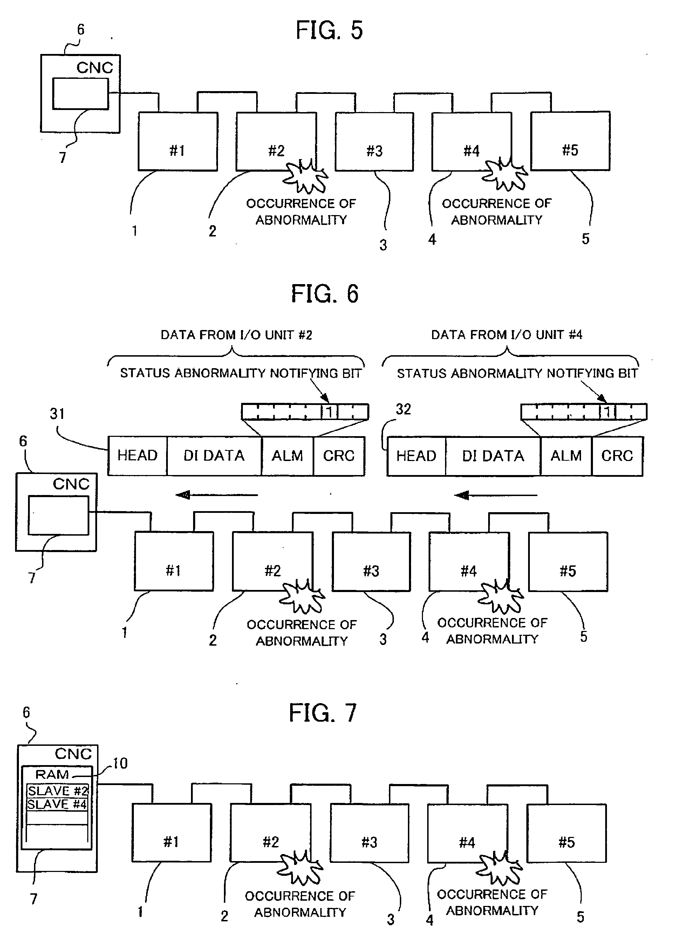

FIG. 5 shows a case where abnormalities have occurred in a plurality of I/O units of #2 and #4.

FIG. 6 shows that the input signals 31, 32 with the status abnormality notifying bit set in the respective ALM frames are transmitted from the I/O units #2 and #4 to the PC 7 when abnormalities have occurred in the I/O unit #2 and the I/O unit #4. The HEAD frames of the input signals 31 and 32 store information identifying where the input signals 31 and 32 are being transmitted from.

FIG. 7 shows that the information specifying the I/O units #2 and #4 in which abnormalities have occurred is stored in the PC7. When the PC 7 receives the input signals 31, 32 having ALM frames with the status abnormality notifying bits set, the PC 7 specifies the I/O unit #2 and the I/O unit #4 based on the information in the HEAD frames of the input signals 31, 32, respectively, and stores information indicative of the I/O units in which the abnormalities have occurred, in the RAM 10 of the PC 7 as the status-information acquiring I/O unit information.

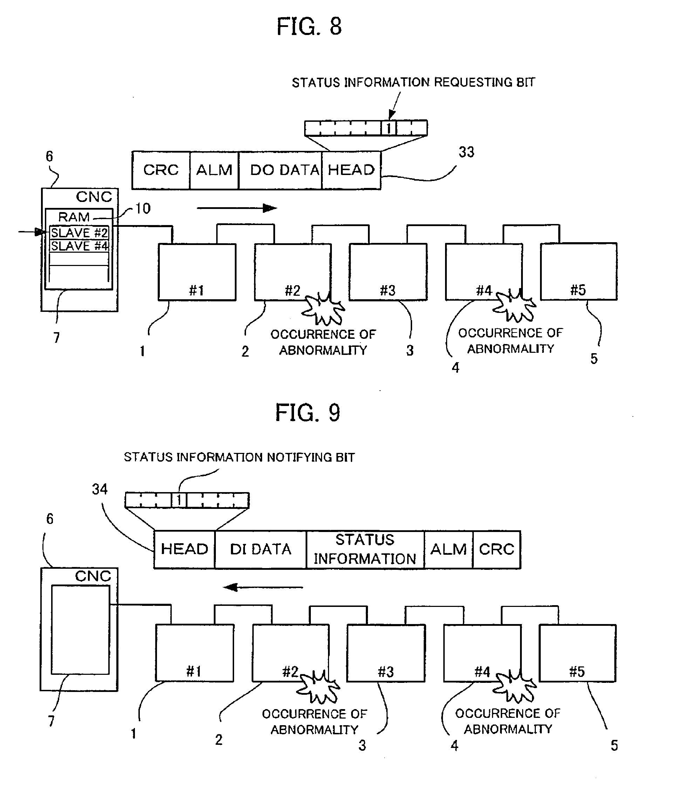

FIG. 8 shows an example of transmitting status information requests from the PC 7 to the I/O unit #2 in the case where abnormalities have occurred in the plurality of I/O units #2 and #4. When the PC 7 is to send an output signal 33 to the I/O unit #2 from which the status abnormality notification has been transmitted, the PC 7 sends the output signal 33 with the status information requesting bit set in the HEAD frame of the output signal 33 according to the status-information acquiring I/O unit information.

FIG. 9 shows an example of transmitting the status information from the I/O unit #2 to the PC 7 in the case where abnormalities have occurred in the I/O units #2 and #4. When the I/O unit #2 receives the output signal 33 having the HEAD frame with the status information requesting bit set, the I/O unit #2 sets the status information notifying bit in the HEAD frame of an input signal 34 and transmits an input signal 34 with the status information added next to the DI data. Then, the status information from the I/O unit #2 is stored in the RAM 10 of the PC 7.

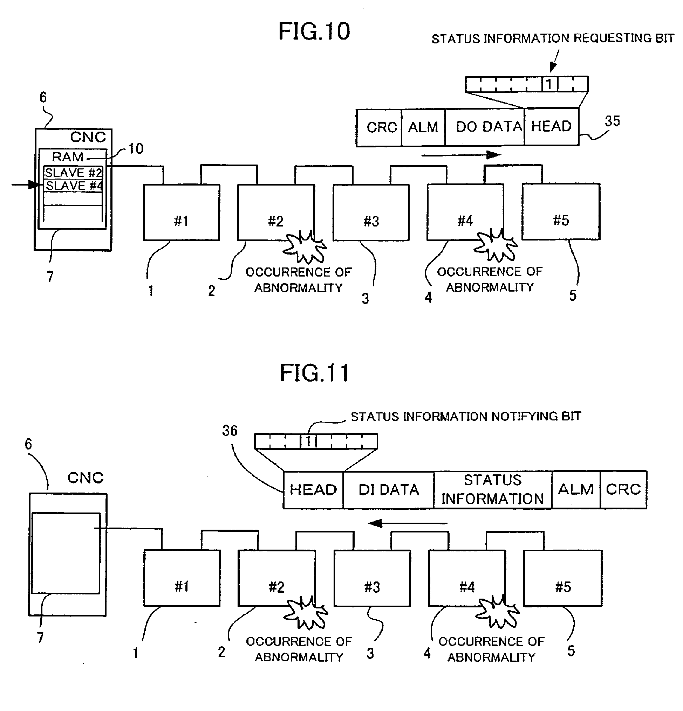

FIG. 10 shows an example of transmitting the status information request from the PC 7 to the I/O unit #4 in the case where abnormalities have occurred in the I/O units #2 and #4. When the PC 7 is to send an output signal 35 to the I/O unit #4 from which the status abnormality notification has been transmitted, the PC 7 sends the output signal 35 with the status information requesting bit set in the HEAD frame of the output signal 35 in accordance with the stored status-information acquiring I/O unit information.

FIG. 11 shows an example of transmitting the status information from the I/O unit #4 to the PC 7. When the I/O unit #4 receives the output signal 35 having the HEAD frame with the status information requesting bit set, the I/O unit #4 sets the status information notifying bit in the HEAD frame of an input signal 36 and sends the input signal 36 with the status information added next to the DI data. Then, the status information from the I/O unit #4 is stored in the RAM 10 of the PC 7. The processing is successively performed for all of the I/O units which are specified to be the I/O unit in which the abnormality have occurred based on the status-information acquiring I/O unit information.

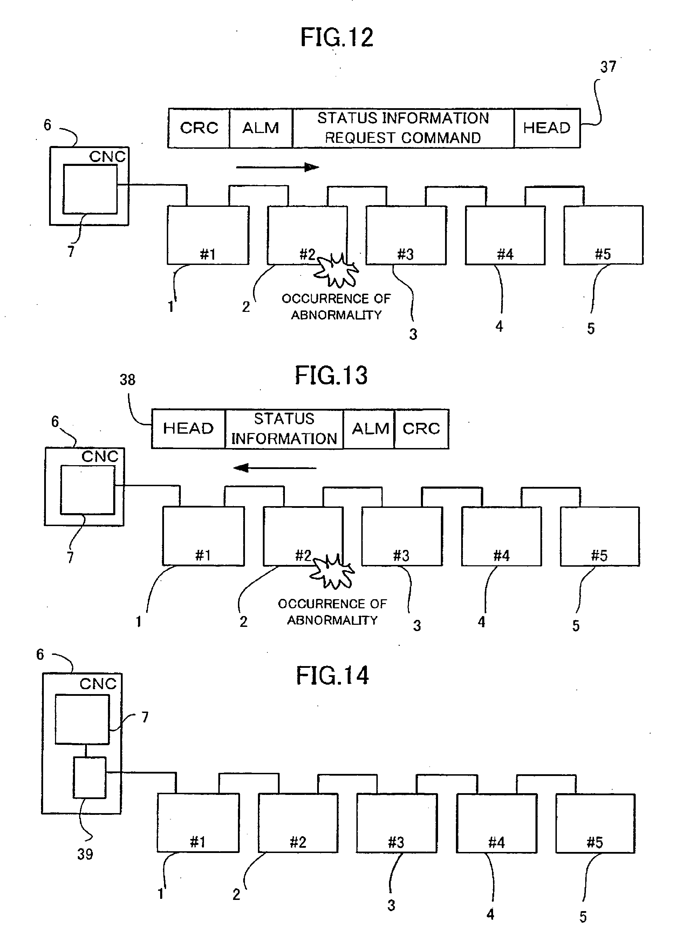

FIGS. 12 and 13 show an embodiment in which status information is transmitted by a separate packet. When an abnormality occurs in any of the I/O units, the occurrence of abnormality is notified to the PC 7 using the status abnormality notifying bit, and the status-information acquiring I/O unit information is stored in the RAM 10 in the same manner as the above embodiments. The procedure of transmission of the DI data and the DO data for each of the I/O units is completed in one scanning cycle, the PC 7 sends a status information request command to each of the I/O units specified by the status-information acquiring I/O unit information (e.g. slave numbers) stored in the RAM 10, independently and separately from the transmission of the DI data and the DO data. The I/O unit which receives the status information request command, transmits the status information to the PC 7. Since the status information request command and the status information of the I/O unit are transmitted independently from the transmission of the DI data and the DO data which are regularly performed each scanning cycle, the request and collection of the status information of the I/O units are performed giving priority to the transmission of the DI data and the DO data.

FIG. 14 shows an example of system configuration in which a PC 7 is provided in a numerical controller 6 and a plurality of I/O units are connected to the PC 7 through a communication controller 39 and a communication line 24. The communication controller 39 connected to the PC 7 reduces a load of the CPU8 in the PC 7 and prevents lowering of performance of numerical control of the numerical controller 6.

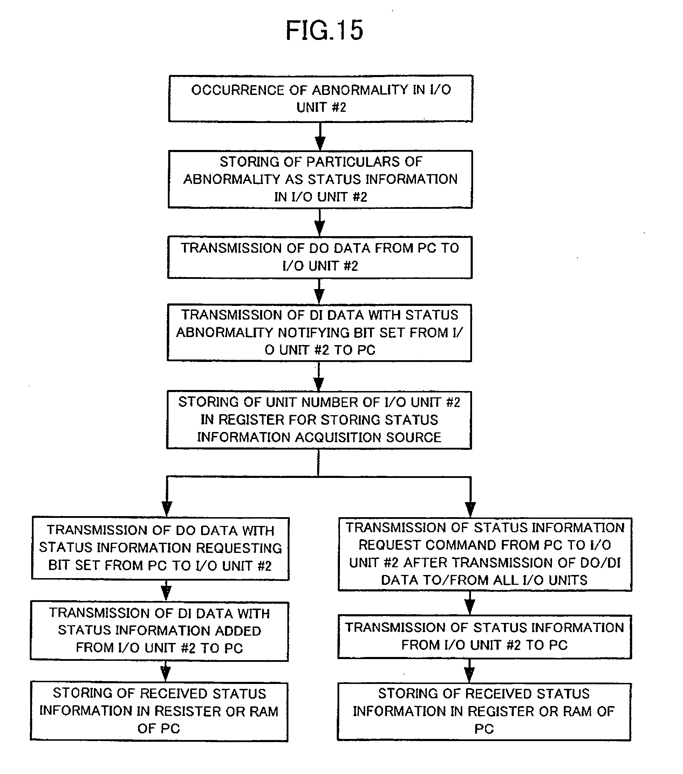

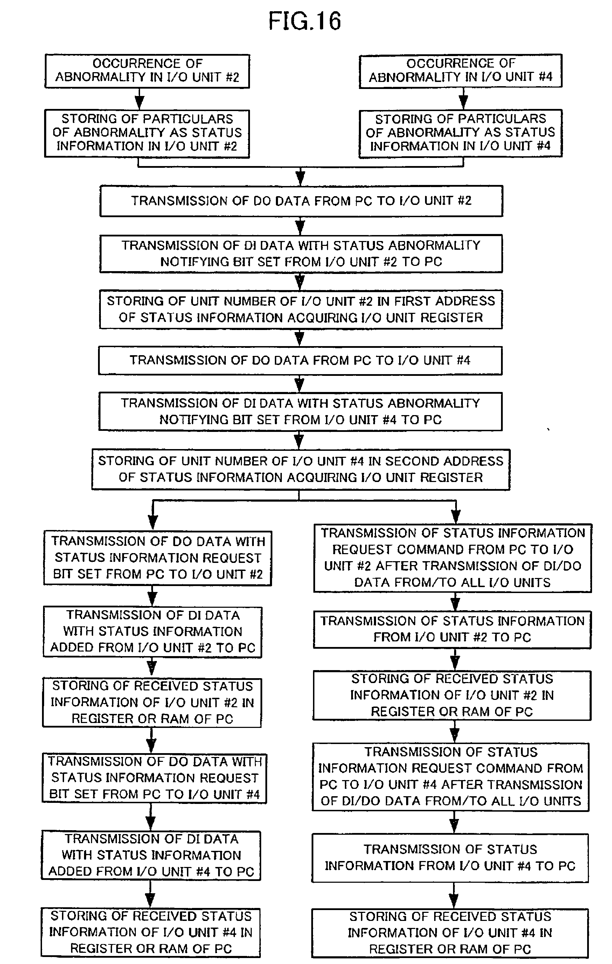

FIG. 15 is a flow diagram of processing for acquiring the status information of one I/O unit, and FIG. 16 is a flow diagram of acquiring the status information from the plurality of I/O units.

## Claims

1. A method of acquiring status information from any of a plurality of I/O units (1...5) connected in series by a communication line (24) to a numerical controller (6) for transmitting input/output information from/to the numerical controller (6), comprising the steps of:
storing particulars of a first abnormality occurred in a first I/O unit of the I/O units (1...5) as first status information within the first I/O unit in which the first abnormality has occurred;
storing particulars of a second abnormality occurred in a second I/O unit of the I/O units (1...5) as second status information within the second I/O unit in which the second abnormality has occurred;
transmitting a notification of occurrence of the first abnormality and information (28, 31, 32) indicative of the first I/O unit (1...5) in which the abnormality has occurred from the first I/O unit to the numerical controller (6);
storing the information indicative of the first I/O unit (1...5) in which the abnormality has occurred in the numerical controller (6);
transmitting a notification of occurrence of the second abnormality and information (28, 31, 32) indicative of the second I/O unit (1...5) in which the second abnormality has occurred from the second I/O unit to the numerical controller (6);
storing the information indicative of the second I/O unit (1...5) in which the second abnormality has occurred in the numerical controller (6);
transmitting a request (29, 33, 35, 37) for the first status information from the numerical controller (6) to the first I/O unit (1...5) in which the first abnormality has occurred, in response to the notification of the first abnormality from the first I/O unit (1...5);
transmitting the first status information (30, 34, 36, 38) stored in the first I/O unit (1...5) in which the first abnormality has occurred to the numerical controller (6) in response to the request for the first status information;
storing the transmitted first status information of the first I/O unit (1...5) in the numerical controller (6);
transmitting a request (29, 33, 35, 37) for the second status information from the numerical controller (6) to the second I/O unit (1...5) in which the second abnormality has occurred, in response to the notification of the second abnormality from the second I/O unit (1...5);
transmitting the second status information (30, 34, 36, 38) stored in the second I/O unit (1...5) in which the second abnormality has occurred to the numerical controller (6) in response to the request for the second status information; and
storing the transmitted second status information of the second I/O unit (1...5) in the numerical controller (6).

2. A method of acquiring status information of I/O units according to claim 1, wherein the first or second status information is transmitted with the input information (DI) from the first or second I/O unit (1...5) to the numerical controller (6) as being added to the input information (DI).

3. A method of acquiring status information of I/O units according to claim 1, wherein the first or second status information is transmitted from the first or second I/O unit (1...5) to the numerical controller (6) as packet information separate from the input/output information (DI/DO).

4. A method of acquiring status information of I/O units according to claim 1, further comprising a step of displaying the transmitted status information on a display device (21) of the numerical controller (6).

## Patentansprüche

1. Verfahren zum Erfassen von Zustandsinformation von irgendeiner aus einer Mehrzahl in Reihe über eine Kommunikationslinie (24) mit einer digitalen Steuerung (6) verbundener E/A-Einheiten (1...5) zum Übertragen von Eingangs-/Ausgangsinformation von/zu der digitalen Steuerung (6), umfassend die Schritte
Ablegen von Einzelheiten einer ersten in einer ersten E/A-Einheit der E/A-Einheiten (1...5) vorgekommenen Unregelmäßigkeit als erste Zustandsinformation innerhalb der ersten E/A-Einheit, in welcher die erste Unregelmäßigkeit vorgekommen ist;
Ablegen von Einzelheiten einer zweiten in einer zweiten E/A-Einheit der E/A-Einheiten (1...5) vorgekommenen Unregelmäßigkeit als zweite Zustandsinformation innerhalb der zweiten E/A-Einheit, in welcher die zweite Unregelmäßigkeit vorgekommen ist;
Übertragen einer Mitteilung des Vorkommens der ersten Unregelmäßigkeit und von Information (28, 31, 32), welche die erste E/A-Einheit (1...5) anzeigt, in welcher die erste Unregelmäßigkeit vorgekommen ist, von der ersten E/A-Einheit zur digitalen Steuerung (6);
Ablegen der Information, welche die erste E/A-Einheit (1...5) anzeigt, in welcher die erste Unregelmäßigkeit vorgekommen ist, in der digitalen Steuerung (6);
Übertragen einer Mitteilung des Vorkommens der zweiten Unregelmäßigkeit und von Information (28, 31, 32), welche die zweite E/A-Einheit (1...5) anzeigt, in welcher die zweite Unregelmäßigkeit vorgekommen ist, von der zweiten E/A-Einheit zur digitalen Steuerung (6);
Ablegen der Information, welche die zweite E/A-Einheit (1...5) anzeigt, in welcher die zweite Unregelmäßigkeit vorgekommen ist, in der digitalen Steuerung (6);
Übertragen einer Anfrage (29, 33, 35, 37) für die erste Zustandsinformation von der digitalen Steuerung (6) zur ersten E/A-Einheit (1...5), in welcher die erste Unregelmäßigkeit vorgekommen ist, als Reaktion auf die Mitteilung der ersten Unregelmäßigkeit von der ersten E/A-Einheit (1...5);
Übertragen der ersten in der ersten E/A-Einheit, in welcher die erste Unregelmäßigkeit vorgekommen ist, abgelegten Zustandsinformation (30, 34, 36, 38) an die digitale Steuerung (6) als Reaktion auf die Anfrage der ersten Zustandsinformation;
Ablegen der übertragenen ersten Zustandsinformation der ersten E/A-Einheit (1...5) in der digitalen Steuerung (6);
Übertragen einer Anfrage (29, 33, 35, 37) für die zweite Zustandsinformation von der digitalen Steuerung (6) zur zweiten E/A-Einheit (1...5), in welcher die zweite Unregelmäßigkeit vorgekommen ist, als Reaktion auf die Mitteilung der zweiten Unregelmäßigkeit von der zweiten E/A-Einheit (1...5);
Übertragen der zweiten in der zweiten E/A-Einheit (1...5), in welcher die zweite Unregelmäßigkeit vorgekommen ist, abgelegten Zustandsinformation (30, 34, 36, 38) an die digitale Steuerung (6) als Reaktion auf die Anfrage der zweiten Zustandsinformation; und
Ablegen der übertragenen zweiten Zustandsinformation der zweiten E/A-Einheit (1...5) in der digitalen Steuerung (6).

2. Verfahren zum Erfassen von Zustandsinformation gemäß Anspruch 1, wobei die erste oder zweite Zustandsinformation mit der Eingangsinformation (DI) von der ersten oder zweiten E/A-Einheit (1...5) an die digitale Steuerung (6) übertragen wird, als zur Eingangsinformation (DI) zugefügt.

3. Verfahren zum Erfassen von Zustandsinformation gemäß Anspruch 1, wobei die erste oder zweite Zustandsinformation von der ersten oder zweiten E/A-Einheit (1...5) an die digitale Steuerung (6) übertragen wird, als Paketinformation, getrennt von der Eingangs-/Ausgangsinformation (DI/DO).

4. Verfahren zum Erfassen von Zustandsinformation gemäß Anspruch 1, zudem umfassend einen Schritt des Anzeigens der übertragenen Zustandsinformation auf einer Anzeigevorrichtung (21) der digitalen Steuerung (6).

## Revendications

1. Un procédé d'acquisition d'informations d'état provenant d'une unité quelconque d'une pluralité d'unités d'E/S (1...5) raccordées en série par une ligne de communication (24) à un dispositif de commande numérique (6) pour la transmission d'informations d'entrée/sortie de/vers le dispositif de commande numérique (6), comprenant les opérations suivantes :
la conservation en mémoire de détails d'une première anomalie qui s'est produite dans une première unité d'E/S des unités d'E/S (1...5) en tant que premières informations d'état à l'intérieur de la première unité d'E/S dans laquelle la première anomalie s'est produite,
la conservation en mémoire de détails d'une deuxième anomalie qui s'est produite dans une deuxième unité d'E/S des unités d'E/S (1...5) en tant que deuxièmes informations d'état à l'intérieur de la deuxième unité d'E/S dans laquelle la deuxième anomalie s'est produite,
la transmission d'une notification d'occurrence de la première anomalie et d'informations (28, 31, 32) indicatives de la première unité d'E/S (1...5) dans laquelle l'anomalie s'est produite de la première unité d'E/S vers le dispositif de commande numérique (6),
la conservation en mémoire des informations indicatives de la première unité d'E/S (1...5) dans laquelle l'anomalie s'est produite dans le dispositif de commande numérique (6),
la transmission d'une notification d'occurrence de la deuxième anomalie et d'informations (28, 31, 32) indicatives de la deuxième unité d'E/S (1...5) dans laquelle la deuxième anomalie s'est produite de la deuxième unité d'E/S vers le dispositif de commande numérique (6),
la conservation en mémoire des informations indicatives de la deuxième unité d'E/S (1...5) dans laquelle la deuxième anomalie s'est produite dans le dispositif de commande numérique (6),
la transmission d'une demande (29, 33, 35, 37) pour les premières informations d'état du dispositif de commande numérique (6) vers la première unité d'E/S (1...5) dans laquelle la première anomalie s'est produite, en réponse à la notification de la première anomalie provenant de la première unité d'E/S (1...5),
la transmission des premières informations d'état (30, 34, 36, 38) conservées en mémoire dans la première unité d'E/S (1...5) dans laquelle la première anomalie s'est produite vers le dispositif de commande numérique (6) en réponse à la demande pour les premières informations d'état,
la conservation en mémoire des premières informations d'état transmises de la première unité d'E/S (1...5) dans le dispositif de commande numérique (6),
la transmission d'une demande (29, 33, 35, 37) pour les deuxièmes informations d'état du dispositif de commande numérique (6) vers la deuxième unité d'E/S (1...5) dans laquelle la deuxième anomalie s'est produite, en réponse à la notification de la deuxième anomalie provenant de la deuxième unité d'E/S (1...5),
la transmission des deuxièmes informations d'état (30, 34, 36, 38) conservées en mémoire dans la deuxième unité d'E/S (1...5) dans laquelle la deuxième anomalie s'est produite vers le dispositif de commande numérique (6) en réponse à la demande pour les deuxièmes informations d'état, et
la conservation en mémoire des deuxièmes informations d'état transmises de la deuxième unité d'E/S (1...5) dans le dispositif de commande numérique (6).

2. Un procédé d'acquisition d'informations d'état d'unités d'E/S selon la revendication 1, où les premières ou deuxièmes informations d'état sont transmises avec les informations d'entrées (DI) de la première ou de la deuxième unité d'E/S (1...5) vers le dispositif de commande numérique (6) comme étant ajoutées aux informations d'entrées (DI).

3. Un procédé d'acquisition d'informations d'état d'unités d'E/S selon la revendication 1, où les premières ou deuxièmes informations d'état sont transmises de la première ou de la deuxième unité d'E/S (1...5) vers le dispositif de commande numérique (6) sous la forme d'informations en paquets distinctes des informations d'entrée/sortie (DI/DO).

4. Un procédé d'acquisition d'informations d'état d'unités d'E/S selon la revendication 1, comprenant en outre une opération d'affichage des informations d'état transmises sur un dispositif d'affichage (21) du dispositif de commande numérique (6).
